# EUROPÄISCHE PATENTSCHRIFT

(11) **EP 1 189 837 B1**
(45) Veröffentlichungstag und Bekanntmachung des Hinweises auf die Patenterteilung: **09.07.2003**
(21) Anmeldenummer: 00926819.4
(22) Anmeldetag: 06.04.2000
(51) Int. Cl.: C01B 17/88, B01D 1/26, B01D 1/30

(54) **VERFAHREN ZUR AUFKONZENTRIERUNG VON DÜNNSÄURE**
METHOD FOR CONCENTRATING DILUTE ACID
PROCEDE POUR LA CONCENTRATION D'ACIDE DILUE

(30) Priorität: 05.05.1999 DE 19920695
(43) Veröffentlichungstag der Anmeldung: 27.03.2002
(73) Patentinhaber: Sachtleben Chemie GmbH, 47198 Duisburg (DE)
(72) Erfinder: FACH, Roland, D-46514 Schermbeck (DE); ENGELS, Klaus, D-47647 Kerken (DE)
(74) Vertreter: Uppena, Franz, Dr.
(86) Internationale Anmeldenummer: EP0003062
(87) Internationale Veröffentlichungsnummer: WO00068141

(56) Entgegenhaltungen:
- EP-A- 0 022 181
- EP-A- 0 476 744
- EP-A- 0 903 322
- DE-A- 19 642 328
- US-A- 4 409 064
- US-A- 5 061 472
- US-A- 5 275 701

## Beschreibung

Die Erfindung betrifft ein Verfahren zur Aufkonzentrierung von Dünnsäure in einer dreistufigen Zwangsumlaufverdampferanlage, bei dem Dünnsäure der ersten Stufe zugeführt und aus der dritten Stufe aufkonzentrierte Schwefelsäure abgeführt wird, indem Wasserdampf und/oder Brüden als Heizmedium eingesetzt, im Verdampferbehälter der ersten Stufe ein Druck von 0,4 bis 1,0 bar sowie eine Temperatur von 80 bis 140°C, im Verdampferbehälter der zweiten Stufe ein Druck von 0,02 bis 0,1 bar sowie eine Temperatur von 50 bis 120°C und im Verdampferbehälter der dritten Stufe ein Druck von 0,02 bis 0,1 bar sowie eine Temperatur von 80 bis 140°C eingestellt, die nicht als Heizmedium eingesetzten Brüdendämpfe kondensiert, 30 bis 100 % des Dünnsäurestroms dem Verdampferbehälter der ersten Stufe kontinuierlich zugeführt und gegebenenfalls die restliche Menge der Dünnsäure dem Verdampferbehälter der zweiten Stufe kontinuierlich zugeführt wird.

Ein solches in der Praxis eingesetztes Verfahren ist in der EP-B 0 476 744 beschrieben. Bei diesem Verfahren wird der im Kreislauf über einen Wärmeaustauscher geführten Dünnsäure in einem Verdampferbehälter durch Entspannungsverdampfung ein Teil-des Wassers entzogen. Der dadurch freigesetzte Brüden wird am Kopf des Verdampferbehälters abgezogen und der nächsten Kondensationsstufe zugeleitet. Jede einzelne Stufe der dreistufigen Vakuumzwangsumlaufverdampferanlage besteht aus einem Verdampferbehälter, an dem eine Umwälzleitung mit Umwälzpumpe und ein Rohrbündelwärmeaustauscher angeschlossen ist. Die aufzukonzentrierende Dünnsäure zirkuliert in dem jeweiligen Verdampferkreislauf in einer für die jeweilige Stufe entsprechende Konzentration, wobei die Dünnsäure jeweils im Rohrbündelwärmeaustauscher leicht überhitzt und im Verdampferbehälter ein Teil des Wassers durch Entspannung ausgedampft wird. Der Druck des Wasserdampfs, der als Heizmedium verwendet wird, beträgt in der Regel 1 bis 6 bar. Durch diese Verfahrensweise wird die Ausbildung von nachteilig wirkenden, schwer zu entfernenden Gipsablagerungen im Säurekreislauf der ersten Stufe vermieden. Der Brüden enthält durch mitgerissene Tröpfchen der Dünnsäure einen hohen Anteil an Schwefelsäure und Schwermetallsalzen. Die Schwermetallsalze liegen sowohl in ungelöster als auch gelöster Form vor und führen in den nachfolgenden Anlageteilen zu Anbackungen. Ein weiterer Nachteil ist darin zu sehen, daß das Brüdenkondensat noch Anteile an Schwermetall und/oder Schwefelsäure enthält.

Die vorliegende Erfindung geht von der Erkenntnis aus, daß ein enger Zusammenhang zwischen der Wasserverdampfungsleistung der Verdampferbehälter und der vom Brüden mitgerissenen Menge an Tröpfchen besteht.

Es ist die Aufgabe der vorliegenden Erfindung, das eingangs beschriebene Verfahren so auszugestalten, daß die Verdampfungsleistung wenigstens des Verdampferbehälters einer Stufe der Zwangsumlaufverdampferanlage gesteigert und trotzdem die Menge der vom Brüden mitgerissenen Dünnsäuretröpfchen deutlich erniedrigt wird.

Die Lösung dieser Aufgabe besteht darin, daß im Verdampferbehälter wenigstens einer Stufe die vom gebildeten Brüden. aus dem Sumpf des Verdampferbehälters mitgerissenen Tröpfchen der aufzukonzentrierenden Dünnsäure durch ein Tropfenabscheidersystem abgeschieden und in den Sumpf des Verdampfarbehälters zurückgeführt werden, wobei das Tropfenabscheidersysten aus einem nach dem Prallflächenprinzip arbeitenden Lamellenabscheider besteht.

Zur Vermeidung von Ablagerungen und Verstopfungen des Tropfenabscheidersystems ist es von Vorteil, die in den Verdampferbehältern eingebauten Tropfenabscheidersysteme kontinuierlich oder diskontinuierlich zu spülen, wobei die Spülung in Gasrichtung, entgegen der Gasrichtung oder gleichzeitig in beiden Richtungen erfolgen kann.

Dabei ist die Verwendung von aufkonzentrierter Dünnsäure aus dem Sumpf des jeweiligen Verdampferbehälters von besonderem Vorteil, da sowohl der Durchsatz als auch die Eindampfleistung des Verdampferbehälters nicht beeinträchtigt werden.

Es ist aber auch möglich, die Tropfenabscheidersysteme mit von außerhalb der Zwangsumlaufverdampferanlage zugeführten Spülmedien, wie Wasser, Schwefelsäure, Dünnsäure oder dergleichen zu reinigen.

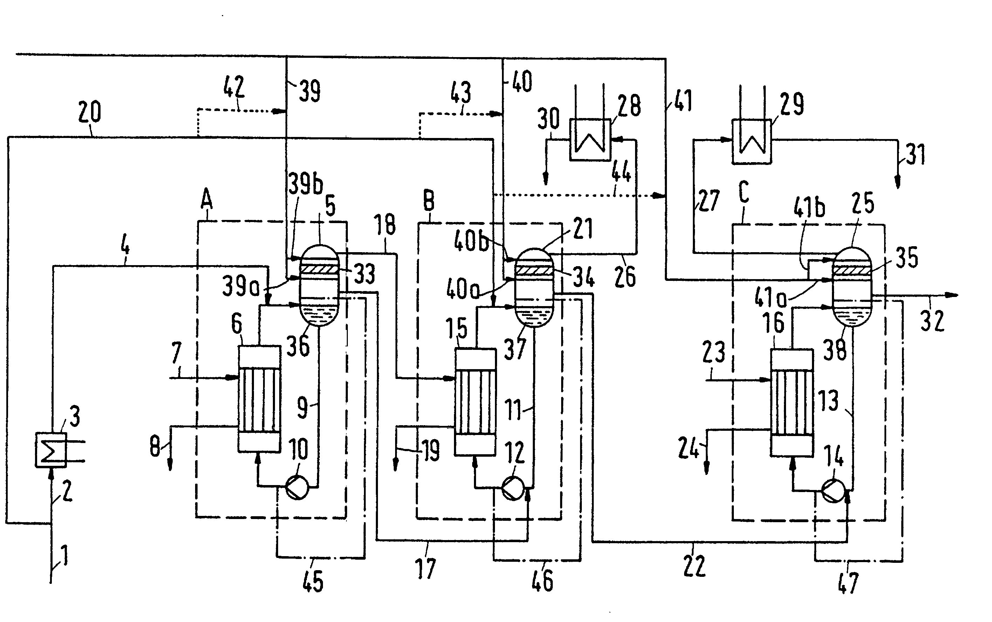

Das erfindungsgemäße Verfahren ist nachfolgend anhand der Zeichnung näher und beispielhaft erläutert. Bei dem Verfahrensfließbild einer dreistufigen Zwangsumlaufverdampferanlage wird aus dem Dünnsäurestrom (1) ein Teilstrom (2) abgezweigt, in einem Vorwärmer (3) erwärmt und anschließend über Leitung (4) dem Verdampferbehälter (5) der ersten Stufe (A) zugeführt. Der Rohrbündelwärmeaustauscher (6) der ersten Stufe (A) wird mit von außen über Leitung (7) zugeführtem Heißdampf beheizt, der als Kondensat über Leitung (8) aus dem Rohrbündelwärmeaustauscher (6) abgeführt wird. Der Verdampferbehälter (5) der ersten Stufe (A) ist über die Umwälzleitung (9) mit Umwälzpumpe (10) mit dem Rohrbündelwärmeaustauscher (6) verbunden. Die zweite Stufe (B) und die Dritte Stufe (C) weisen jeweils dieselbe Anordnung von Umwälzleitung (11, 13) mit Umwälzpumpe (12, 14) und Rohrbündelwärmeaustauscher (15, 16) auf wie die erste Stufe (A) . Die in der ersten Stufe (A) aufkonzentrierte Dünnsäure wird über Leitung (17) aus dem Verdampferbehälter (5) abgeführt und gelangt anschließend in die zweite Stufe (B). Der aus dem Verdampferbehälter (5) am Kopf austretende Brüden, der als Heizmedium in der zweiten Stufe (B) eingesetzt wird, strömt über Leitung (18) zum Rohrbündelwärmeaustauscher (15). Dabei kommt es zur Kondensation des Brüdens, und das Kondensat wird über Leitung (19) aus dem Rohrbündelwärmeaustauscher (15) abgeführt. Der restliche Teil des Dünnsäurestroms (1) wird über Leitung (20) unmittelbar dem Verdampferbehälter (21) der zweiten Stufe (B) zugeführt. Die in der zweiten Stufe (B) weiter aufkonzentrierte Dünnsäure wird aus dem Verdampferbehälter (21) entnommen und über Leitung (22) der dritten Stufe (C) zugeführt. Der Rohrbündelwärmeaustauscher (16) der dritten Stufe (C) wird mit von außen über Leitung (23) zugeführtem Wasserdampf beheizt. Das gebildete Kondensat wird über Leitung (24) aus dem Rohrbündelwärmeaustauscher (16) abgeleitet. Die in den Verdampferbehältern (21) der zweiten Stufe (B) und (25) der dritten Stufe (C) anfallenden Brüden werden über Leitung (26) beziehungsweise (27) jeweils einem Kondensator (28, 29) aufgegeben, darin kondensiert und das gebildete Kondensat über Leitungen (30, 31) abgeführt. Die aufkonzentrierte Dünnsäure (Schwefelsäure) wird über Leitung (32) als Endprodukt dem Verdampferbehälter (25) der dritten Stufe (C) entnommen. Im oberen Teil der Verdampferbehälter (5, 21 und 25) ist jeweils als Tropfenabscheider ein nach dem Prallflächenprinzip arbeitender Lamellenabscheider (33, 34, 35) angeordnet, mit deren Hilfe die im Brüden enthaltenen Dünnsäuretröpfchen abgeschieden und in den Sumpf (36, 37, 38) zurückgeführt werden. Über die Leitungen (39, 40, 41) wird von außen ein Spülmedium, das gegebenenfalls das über die Leitungen (8, 19, 24) aus den Rohrbündelwärmeaustauschern (6, 15, 16) abgeleitete Kondensat sein kann, zum Spülen der Tropfenabscheider (33, 34, 35) zugeführt.

Alternativ ist es möglich, die Tropfenabscheider (33, 34, 35) mittels aus der Leitung (20) über die Leitungen (42, 43, 44) entnommener Dünnsäure zu spülen. Ferner können alternativ die Tropfenabscheider (33, 34, 35) mit der im Kreislauf über die Leitungen (45, 46, 47) geführten aufkonzentrierten und gegebenenfalls filtrierten Dünnsäure der jeweiligen Verdampferbehälter (5, 21, 25) gespült werden.

Die Spülung der Tropfenabscheider, die kontinuierlich oder diskontinuierlich erfolgen kann, wird von unten über Leitungen (39a, 40a, 41a) in Strömungsrichtuna des Brüdens oder von oben über Leitungen (39b, 40b, 41b) entgegen der Strömungsrichtung des Brüdens oder in und entgegen der Strömungsrichtung des Brüdens durchgeführt.

## Patentansprüche

1. Verfahren zur Aufkonzentrierung von metallsulfathaltiger Dünnsäure in einer dreistufigen Zwangsumlaufverdampferanlage, bei dem Dünnsäure der ersten Stufe (A) zugeführt und aus der dritten Stufe (C) eine aufkonzentrierte Schwefelsäure (32) abgeführt wird, wobei Wasserdampf (7) und/oder Brüden (18) als Heizmedium eingesetzt, im Verdampferbehälter (5) der ersten Stufe (A) ein Druck von 0,4 bis 1,0 bar sowie eine Temperatur von 80 bis 140°C, im Verdampferbehälter (21) der zweiten Stufe (B) ein Druck von 0,02 bis 0,1 bar sowie eine Temperatur von 50 bis 120°C und im Verdampferbehälter (25) der dritten Stufe (C) ein Druck von 0,02 bis 0,1 bar sowie eine Temperatur von 80 bis 140°C eingestellt, die nicht als Heizmedium eingesetzten Brüden (26) und (27) kondensiert und 30 bis 100 % des Dünnsäuresstroms (1) dem Verdampferbehälter (5) der ersten Stufe (A) kontinuierlich zugeführt wird, **dadurch gekennzeichnet, daß** im Verdampferbehälter (5, 21, 25) wenigstens einer Stufe (A, B, C) die vom gebildeten Brüden aus dem Sumpf des Verdampferbehälters (36, 37, 38) mitgerissenen Tröpfchen der aufzukonzentrierenden Dünnsäure durch ein Tropfenabscheidersystem abgeschieden und in den Sumpf des Verdampferbehälters zurückgeführt werden, wobei das Tropfenabscheidersystem aus einem nach dem Prallflächenprinzip arbeitenden Lamellenabscheider besteht.

2. Verfahren nach Anspruch 1, **dadurch gekennzeichnet, daß** im Verdampferberhälter (5, 21, 26) wenigstens einer Stufe (A, B, C), vorzugsweise der Stufe (B) ein Tropfenabscheidersystem (33, 34, 35) eingebaut ist.

3. Verfahren nach einem der Ansprüche 1 und 2, **dadurch gekennzeichnet, daß** das Tropfenabscheidersystem (33, 34, 35) diskontinuierlich oder kontinuierlich gespült wird.

4. Verfahren nach einem der Ansprüche 1 bis 3, **dadurch gekennzeichnet, daß** das Tropfenabscheidersystem (33, 34, 35) von unten (39a, 40a, 41a) in Strömungsrichtung oder von oben (39b, 40b, 41b) entgegen der Strömungsrichtung des Brüdens oder gleichzeitig in beiden Richtungen von unten und von oben gespült wird.

5. Verfahren nach einem der Ansprüche 1 bis 4, **dadurch gekennzeichnet, daß** die im Kreislauf (45, 46, 47) geführte, aufkonzentrierte und gegebenenfalls aufbereitete Dünnsäure wenigstens eines Verdampferbehälters (5, 21, 25) zur Spülung des jeweiligen Tropfenabscheidersystems (33, 34, 35) benutzt wird.

6. Verfahren nach einem der Ansprüche 1 bis 5, **dadurch gekennzeichnet, daß** das Spülen des Tropfenabscheidersystems (33, 34, 35) mit von außen zugeführtem Spülmedium (39, 40, 41) erfolgt.

7. Verfahren nach einem der Ansprüche 1 bis 6, **dadurch gekennzeichnet, daß** das Spülen des Tropfenabscheidersystems (33, 34, 35) mit der den Verdampferbehältern (5, 21) zugeführten Dünnsäure (4, 20) erfolgt.

## Claims

1. Process for concentrating dilute acid containing metal sulfate in a three-stage forced circulation evaporator, in which dilute acid is added to the first stage (A) and a concentrated sulfuric acid (32) is withdrawn from the third stage (C), wherein steam (7) and/or exhaust vapours (18) are used as heating medium, a pressure of 0.4 to 1.0 bar as well as a temperature of 80° to 140°C are set in the evaporator vessel (5) of the first stage (A), a pressure of 0.02 to 0.1 bar as well as a temperature of 50° to 120°C are set in the evaporator vessel (21) of the second stage (B) and a pressure of 0.02 to 0.1 bar as well as a temperature of 80° to 140°C are set in the evaporator vessel (25) of the third stage (C), the exhaust vapours (26) and (27) not used as heating medium are condensed and 30% to 100% of the dilute acid stream (1) is continuously added to the evaporator vessel (5) of the first stage (A), **characterised in that** in the evaporator vessel (5, 21, 25) of at least one stage (A, B, C) the droplets of the acid to be concentrated that are entrained by the formed exhaust vapour from the sump of the evaporator vessel (36, 37, 38) are separated by a droplet separator system and are returned to the sump of the evaporator vessel, the droplet separator system consisting of a plate separator operating according to the baffle surface principle.

2. Process according to claim 1, **characterised in that** a droplet separator system (33, 34, 35) is incorporated in the evaporator vessel (5, 21, 26) of at least one stage (A, B, C), preferably the stage (B).

3. Process according to one of claims 1 and 2, **characterised in that** the droplet separator system (33, 34, 35) is rinsed discontinuously or continuously.

4. Process according to one of claims 1 to 3, **characterised in that** the droplet separator system (33, 34, 35) is rinsed from below (39a, 40a, 41a) in the flow direction or from above (39b, 40b, 41b) counter to the flow direction of the exhaust vapour, or simultaneously in both directions from below and from above.

5. Process according to one of claims 1 to 4, **characterised in that** the recycled (45, 46, 47) concentrated and optionally processed dilute acid from at least one evaporator vessel (5, 21, 25) is used for rinsing the respective droplet separator system (33, 34, 35).

6. Process according to one of claims 1 to 5, **characterised in that** the rinsing of the droplet separator system (33, 34, 35) is performed with rinsing medium (39, 40, 41) added from outside.

7. Process according to one of claims 1 to 6, **characterised in that** the rinsing of the droplet separator system (33, 34, 35) is carried out with the dilute acid (4, 20) added to the evaporator vessels (5, 21).

## Revendications

1. Procédé de concentration d'acide dilué contenant des sulfates métalliques, dans un dispositif évaporateur à circulation forcée, à trois étages, procédé dans lequel on amène de l'acide dilué au premier étage (A) et l'on extrait un acide sulfurique concentré (2) du troisième étage (C), on utilise comme agent de chauffage de la vapeur d'eau (7) et/ou de la vapeur (18), on établit une pression de 0, 4 à 1, 0 bar et une température de 80 à 140 °C dans le récipient évaporateur (5) du premier étage (A), une pression de 0, 02 à 0, 1 bar et une température de 50 à 120 °C dans le récipient évaporateur (21) du second étage (B) et une pression de 0, 02 à 0, 1 bar et une température de 80 à 140 °C dans le récipient évaporateur (25) du troisième étage (C), on condense les vapeurs (26) et (27) non utilisées comme agent de chauffage et on amène 30 à 100 % du courant d'acide dilué (1) continuellement au récipient évaporateur (5) du premier étage (A), procédé **caractérisé en ce que**, dans le récipient évaporateur (5, 21, 25) d'au moins un étage (A, B, C), les gouttelettes d'acide dilué à concentrer, entraînées à partir du fond du récipient évaporateur (36, 37, 38), sont séparées de la vapeur formée par un système de séparation des gouttes et sont ramenées au fond du récipient évaporateur, le système de séparation des gouttes étant constitué d'un séparateur à lamelles travaillant suivant le principe des surfaces de rebondissement.

2. Procédé selon la revendication 1, **caractérisé en ce que**, dans le récipient évaporateur (5, 21, 25) d'au moins un étage (A, B, C), de préférence de l'étage (B), un système de séparation des gouttes (33, 34, 35) est incorporé.

3. Procédé selon la revendication 1 ou 2, **caractérisé en ce que** le système de séparation des gouttes (33, 34, 35) est lavé continuellement ou de manière discontinue.

4. Procédé selon l'une quelconque des revendications 1 à 3, **caractérisé en ce que** le système de séparation des gouttes (33, 34, 35) est lavé par le bas (39a, 40a, 41a), dans le sens de l'écoulement de la vapeur, ou par le haut (39b, 40b, 41b), dans le sens inverse de celui de l'écoulement de la vapeur, ou simultanément dans les deux sens, par le bas et par le haut.

5. Procédé selon l'une quelconque des revendications 1 à 4, **caractérisé en ce que** l'on utilise pour le lavage du système de séparation des gouttes correspondant (33, 34, 35), l'acide dilué d'au moins un récipient évaporateur (5, 21, 25), concentré et éventuellement traité, entraîné en circuit (45, 46, 47).

6. Procédé selon l'une quelconque des revendications 1 à 5, **caractérisé en ce que** l'on réalise le lavage du système de séparation des gouttes (33, 34, 35) avec un agent de lavage (39, 40, 41) amené par le haut.

7. Procédé selon l'une quelconque des revendications 1 à 6, **caractérisé en ce que** l'on réalise le lavage du système de séparation des gouttes (33, 34, 35) avec l'acide dilué (4, 20) amené aux récipients évaporateurs (5, 21).
